# EUROPEAN PATENT APPLICATION

(11) **EP 4 050 067 A1**
(43) Date of publication of application: **31.08.2022**
(21) Application number: 21159135.9
(22) Date of filing: 25.02.2021
(51) Int. Cl.: C08L 75/16, C08F 290/04, C09J 11/00

(54) **PHOTOCURABLE (METH)ACRYLATE BASED ADHESIVE**

(71) Applicant: Henkel AG & Co. KGaA, 40589 Düsseldorf (DE)
(72) Inventor: Huh, Eunsoo, Seoul 08506 (KR); Seo, Ys Yongseong, Seoul 08506 (KR); Song, Jiye, Seoul 08506 (KR)

(57) **Abstract**

The present invention is directed to an photo-curable one-component (1K) adhesive composition comprising, based on the weight of the composition:
from 30 to 70 wt.% of a) at least one polyurethane (meth)acrylate;
from 5 to 45 wt.% of b) at least one secondary or tertiary (meth)acrylamide monomer represented by the formula (MA):

CH₂=C(R^{a})-C(O)-N(R^{b})(R^{c}) (MA)

wherein: R^{a} is hydrogen or a methyl group;
R^{b} is C₁-C₁₂ alkyl, C₁-C₁₂ hydroxyalkyl, C₃-C₁₈ cycloalkyl or C₆-C₁₈ aryl;
R^{c} is hydrogen; or,
R^{b} and R^{c} together form a 5-10 member carbocylic ring or a 5-10 member heterocyclic ring in which one or more of the ring atoms is replaced with -O-, -S- or -NR^{d}-, where R^{d} is hydrogen or a C₁-₃ alkyl.

from 0.1 to 5 wt.% of c) at least one (meth)acrylate functional silane compound, said meth)acrylate functional silane being characterized by the formula (MS):

Aₘ-B-Si(R^{x})ₙ(OR^{y})₃₋ₙ (MS)

wherein: A comprises a (meth)acryl moiety,
B comprises an aliphatic or aromatic spacer group;
R^{x} is a C₁-C₈ alkyl group or a C₆-C₁₈ aryl group;
R^{y} is a C₁-C₈ alkyl group;
m=1, 2, 3 or 4; and,
n=0, 1 or 2.

from 5 to 40 wt.% of d) at least one further ethylenically unsaturated non-ionic monomer; and,
from 0.1 to 5 wt.% of e) at least one free radical photoinitiator.

## Description

### FIELD OF THE INVENTION

The present invention is directed to an adhesive composition based on (meth)acrylate functional monomers and which is cured under photo-irradiation. The adhesive composition has particular application in the field of electronics and electronic devices.

### BACKGROUND TO THE INVENTION

Anisotropic conductive films (ACFs), which consist of conductive particles and adhesive polymeric matrices, have found wide utility in flat panel display modules and semiconductor packaging applications. These films are lightweight, possess a thin profile and provide low power consumption and have, as a consequence, displaced the use of lead in bonding integrated circuit (IC) chips onto printed circuit boards (PCB), flexible printed circuits (FPC), glass (chip-on-glass, COG) and films (chip-on-film, COF).

When an anisotropic conductive adhesive is applied, the resin in the adhesive is fluidized by the application of heat and pressure. The fluidized resin seals the gap between opposing electrodes on objects to be connected while the electrically conductive particles become trapped between the opposing electrodes, thereby establishing an electrical connection. In being anisotropic, the adhesive films will provide both conduction performance and insulation performance dependent upon the contact direction concerned.

Broadly, the adhesive resin of an anisotropic conductive film (ACF) should provide a short bond time, should adhere to a variety of substrates, provide a bond line without voids, have satisfactory shelf and storage life, and maintain a reliable physical connection between the circuit and the electrical substrate under the operating temperature of the device. Typically, a compromise must usually be made with regard to one or more of these desiderata when selecting the matrix resins. In particular, adhesive resins characterized by high thermal and moisture resistance may lack the flexibility to distribute stresses induced in the resin matrix during curing.

For example, radically polymerizable resins and epoxy resins, in particular, exhibit adhesive strength as they undergo curing shrinkage under heat during connection. This curing shrinkage does however generate stress in the interior of the adhesive and at the interface of the adhesive with the substrate, which stress increases in proportion to the storage elastic modulus of the adhesive. Given that epoxy resins exhibit high storage elastic modulus after cure, the stress generated during the curing shrinkage is high and thus high residual stress remains in the adhesive interface and the interior of the adhesive. Interfacial detachment can thereby occur once the adhesive is disposed in a high-temperature, high-humidity state. This problem is exacerbated where the adhesive is applied in portable or wearable electronic devices which are regularly subjected to mechanical impacts and shocks.

It will be acknowledged that the size of consumer electronic and electromechanical devices is decreasing over time. As a consequence of this, the interconnection pitches between driver integrated circuits (IC) and flex are also decreasing and the connection terminals for the component parts of the devices have also become increasingly small and narrow. This contraction of the distance between adjacent terminals can result in shorts between conductive particles and the need to prevent these has become a determinant of how anisotropic materials are structured. Certain authors have, for example, developed multi-layered ACF structures - such as double and triple-layered ACFs. And, with regard to the present disclosure, it is known in the art to form laminar structures comprising non-conductive film (NCF) adhesives and anisotropic conductive film.

KR100979349B1 (Hyosung Corporation) discloses an anisotropic conductive film having a two-layer structure, said structure comprising an anisotropic conductive film layer and a non-conductive film laminated with an adhesive component containing a thermosetting epoxy group resin component, conductive particles and thermo-tropic liquid crystalline polymer.

US Patent No. 9,871,177 (Liang et al.) discloses an anisotropic conductive film (ACF), comprising: a non-reflective adhesive layer including a top surface and in which are disposed a plurality of conductive particles; a thin film deposited reflective layer disposed along the top surface of the non-reflective adhesive layer, the thin film deposited reflective layer including a second top surface; and a secondary adhesive layer disposed along the second top surface of the thin film deposited reflective layer, wherein the conductive particles are arranged in predetermined locations along a bottom surface of the non-reflective adhesive layer.

US Patent No. 8,796,557 (Ozeki et al.) discloses an adhesive film comprising: a first adhesive layer comprising dispersed conductive particles, a thermoplastic resin and a thermosetting resin; and, a second adhesive layer adhered to the first adhesive layer which comprises a thermosetting resin and a thermoplastic resin. The lowest viscosity of the first adhesive layer attained at or below a curing temperature thereof is higher than the lowest viscosity of the second adhesive layer attained at or below a curing temperature thereof. The first adhesive layer and the second adhesive layer are respectively disposed at a side of a substrate and a side of an electronic part, and the adhesive film is configured to join the electronic part and the substrate by heating and pressurizing the substrate and the electronic part with the adhesive film being there between.

Non-conductive film adhesives and any further adhesives included in such laminar structures must meet the fine pitch capability required of current electronic and electromechanical devices and must demonstrate low-temperature curing, high mechanical reliability and strong adhesion. They must maintain - under the operating conditions of the device - a reliable bond to both substrate(s) and to the matrix resins of anisotropic conductive films (ACFs). The adhesives should not demonstrate detachment from any interfaces.

The present inventors consider that there exists a need in the art to develop further adhesive compositions which can effectively meet such demands.

### STATEMENT OF THE INVENTION

In accordance with a first aspect of the present invention there is provided a photocurable one-component (1K) adhesive composition comprising, based on the weight of the composition:
from 30 to 70 wt.% of a) at least one polyurethane (meth)acrylate;
from 5 to 45 wt.% of b) at least one secondary or tertiary (meth)acrylamide monomer represented by the formula (MA):

   CH₂=C(R^{a})-C(O)-N(R^{b})(R^{c}) (MA)

   wherein:
   R^{a} is hydrogen or a methyl group;
   R^{b} is C₁-C₁₂ alkyl, C₁-C₁₂ hydroxyalkyl, C₃-C₁₈ cycloalkyl or C₆-C₁₈ aryl;
   R^{c} is hydrogen; or,
   R^{b} and R^{c} together form a 5-10 member carbocylic ring or a 5-10 member heterocyclic ring in which one or more of the ring atoms is replaced with -O-, -S- or -NR^{d}-, where R^{d} is hydrogen or a C₁₋₃ alkyl.
from 0.1 to 5 wt.% of c) at least one (meth)acrylate functional silane compound, said (meth)acrylate functional silane being characterized by the formula (MS):

   Aₘ-B-Si(R^{x})ₙ(OR^{y})₃₋ₙ (MS)

   wherein:
   A comprises a (meth)acryl moiety,
   B comprises an aliphatic or aromatic spacer group;
   R^{x} is a C₁-C₈ alkyl group or a C₆-C₁₈ aryl group;
   R^{y} is a C₁-C₈ alkyl group;
   m=1, 2, 3 or 4; and,
   n=0, 1 or 2.
from 5 to 40 wt.% of d) at least one further ethylenically unsaturated non-ionic monomer; and,
from 0.1 to 5 wt.% of e) at least one free radical photoinitiator.

For completeness, by the term *"further"* in part d) of the composition is meant that said ethylenically unsaturated non-ionic monomers are distinct from functional monomers included as components a) to c) of the composition.

In an important embodiment of the present invention, the adhesive composition comprises, based on the weight of the composition:
from 40 to 70 wt.%, preferably from 40 to 60 wt.% of a) said at least one polyurethane (meth)acrylate.
from 10 to 40 wt.% of b) said at least one secondary or tertiary (meth)acrylamide monomer.
from 0.1 to 2.5 wt.%, preferably from 0.5 to 2.5 wt.% of c) said at least one (meth)acrylate functional silane compound;
from 5 to 40 wt.% of d) at least one further ethylenically unsaturated non-ionic monomer;
from 0.1 to 5 wt.% of e) at least one free radical photoinitiator; and,
from 0 to 10 wt.%, preferably from 2 to 8 wt.%, of electrically non-conductive particulate filler.

Good results have been obtained wherein the or each secondary or tertiary (meth)acrylamide monomer b) included in the composition is characterized by: i) a molar volume of from 105 to 135 cm³ ; and / or, a topological polar surface area of from 30 to 50 square Angstroms. The compositions demonstrate effective full-cure when exposed to photo-irradiation and this contributes to the development of efficacious adhesive bond strength.

In accordance with a second aspect of the invention there is provided a bonded structure comprising: a first material layer; and, a second material layer, wherein the cured one component (1K) adhesive composition as defined herein above and in the appended claims is disposed in contact with both first and second material layers.

It is considered, in particular, that said first material layer may consist of an anisotropic conductive film and said second layer may consist of non-conductive film. A robust bonded structure of this type will find utility in an electronic device because the debonding of the constituent layers and thus the disconnection of electronic components can be obviated.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x*" specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the coating compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

As used herein, the term *"monomer"* refers to a substance that can undergo a polymerization reaction to contribute constitutional units to the chemical structure of a polymer. The term *"monofunctionaf',* as used herein, refers to the possession of one polymerizable moiety. The term *"polyfunctional",* as used herein, refers to the possession of more than one polymerizable moiety.

As used herein, the term *"equivalent (eq.")* relates, as is usual in chemical notation, to the relative number of reactive groups present in the reaction.

As used herein, an *"active hydrogen compound"* is a compound that has at least one active hydrogen functional group. Such a functional group includes at least one hydrogen atom that may be readily dissociated therefrom. Preferably, said hydrogen atom is attached to a nitrogen atom, an oxygen atom, a phosphorous atom, or a sulfur atom and, as such, exemplary active hydrogen functional groups are hydroxyl functional groups, amino functional groups and thiol functional groups.

As used herein, *"polyof"* refers to any compound comprising two or more hydroxyl groups: the term is thus intended to encompass diols, triols and compounds containing four or more -OH groups.

As used herein, *"(meth)acryl"* is a shorthand term referring to *"acryf"* and/or *"methacryl".* Thus the term *"(meth)acrylate"* refers collectively to acrylate and methacrylate.

As regards the aforementioned (meth)acrylamide compounds, the terms *"secondary"* and *"tertiary"* refers to the nitrogen atom of the (meth)acrylamido groups, which nitrogen will be bound, respectively, to one or two non-(meth)acrylic substituents.

As used herein, "*C₁-Cₙ alkyl"* group refers to a monovalent group that contains 1 to n carbons atoms, that is a radical of an alkane and includes straight-chain and branched organic groups. As such, a *"C₁-C₁₈ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term *"C₁-C₁₈hydroxyalky"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: nonlimiting examples thereof are a methoxy group, an ethoxy group and an iso-propyloxy group. The term "*C₁-C₁₈ alkoxyalkyl"* as used herein refers to an alkyl group having an alkoxy substituent as defined above and wherein the moiety *(alkyl-O-alkyl)* comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂-C₄ alkylene"* as used herein, is defined as saturated, divalent hydrocarbon radical having from 2 to 4 carbon atoms.

The term "*C₃*-*C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₂₄ alkenyl"* refers to hydrocarbyl groups having from 2 to 24 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "E" and "Z" configurations, as appreciated by those of ordinary skill in the art. In general, however, a preference for unsubstituted alkenyl groups containing from 2 to 10 (C₂-₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃);-CH=CHCH₂CH₃; -CH₂CH=CHCH₃; -CH₂CH₂CH=CH₂; -CH=C(CH₃)₂; -CH₂C(=CH₂)(CH₃);-C(=CH₂)CH₂CH₃; -C(CH₃)=CHCH₃; -C(CH₃)CH=CH₂; -CH=CHCH₂CH₂CH₃;-CH₂CH=CHCH₂CH₃, -CH₂CH₂CH=CHCH₃; -CH₂CH₂CH₂CH=CH₂; -C(=CH₂)CH₂CH₂CH₃;-C(CH₃)=CHCH₂CH₃; -CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"alkylaryl'* refers to alkyl-substituted aryl groups. Further, as used herein *"aralkyl'* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term *"substantially free"* encompasses those embodiments where the specified compound, element, ion, or other like component is completely absent from the composition or is not present in any amount measurable by techniques generally used in the art.

### DETAILED DESCRIPTION OF THE INVENTION

### a) Polyurethane (Meth)acrylate

The composition of the present invention comprises from 30 to 70 wt.%, based on the weight of the composition, of at least one polyurethane (meth)acrylate. For example, the composition may comprise from 40 to 70 wt.% or from 40 to 60 wt.% of said at least one polyurethane (meth)acrylate. It is preferred that the or each polyurethane (meth)acrylate present in the composition is characterized by having from 2 to 3, for example from 2.2 to 2.9 (meth)acrylate groups.

The weight average molecular weight (Mw) of the polyurethane (meth)acrylate(s) is not particularly limited: it should be sufficiently high that the urethane segments impart suitable elasticity to the adhesive but low enough that the polymer is not too viscous to be facilely processed or admixed with the other components of the composition.

Suitable commercial polyurethane (meth)acrylates for use in the present invention include the Laromer^{®} grades UA19T, UA9028, UA9030, LR8987, UA9029, UA9033, UA9047, UA9048, UA9050, UA9072, UA9065 and UA9073, available from BASF SE. It will be appreciated that some of these commercial products are blends with (meth)acrylate monomers.

As is known to the skilled artisan, polyurethane (meth)arylates are most commonly obtained by the reaction of a pre-polymer bearing free NCO groups - sometimes referred to as an aromatic or aliphatic oligoisocyanate - with hydroxyl functional (meth)acrylate compounds. The NCO-functional pre-polymers may be obtained from the reaction of: a) at least one polyol; b) optionally further active hydrogen compounds; and, c) at least one polyisocyanate compound. The molar equivalents ratio of NCO groups to active hydrogen atoms of the reactants should be selected to ensure that free NCO groups are present: the molar equivalents ratio might therefore be at least 1.1:1 and preferably from 1.1:1 to 1.5:1.

The aforementioned reaction may be performed under anhydrous conditions or in the presence of an organic solvent. The reaction may further be performed under catalysis and, for instance, at a temperature of from 25 to 100°C. And the yielded pre-polymer should preferably be characterized by at least one of: i) an NCO content of from 5 to 30%, preferably from 10 to 25 wt.% based on the weight of the pre-polymer; ii) an NCO functionality of from 2.2 to 3.0, preferably from 2.2 or 2.4 to 2.9; iii) a viscosity at 25°C of from 300 to 35,000 mPa.s, preferably from 1,000 to 10,000 mPa.s; and, iv) a number average molecular weight (Mn) of from 500 to 30,000, for example from 500 to 15,000 or from 500 to 10,000 g/mol. For completeness, these characterizations i) to iv) are not intended to be mutually exclusive: indeed, the pre-polymer may meet one, two, three or four of these stated characterizations.

The at least one reactant polyol should herein be selected from the group consisting of: polyester polyols; polyether polyols; and, polycarbonate polyols. The polyol should preferably have a number average molecular weight (Mn) of from 1000 to 50,000 g/mol, for instance from 1000 to 25,000 g/mol. Alternatively or additionally to this molecular weight characterization, the hydroxyl number of the reactant polyol should preferably be from 20 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprotactone.

The above aside, it is preferred that the polyol from which the polyurethane pre-polymer is derived is a polyether polyol, in particular a polyether polyol having a polydispersity (PD) of less than 2, preferably less than 1.5, and more preferably less than 1.3. For completeness, a *"polyether"* is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene and in particular a polyoxy(C₂-C₃)alkylene. For completeness, the term polyoxy(C₂-C₃)alkylene refers to polyether radicals derived from ethyleneoxide, propyleneoxide or both ethyleneoxide and propyleneoxide.

It is noted that at least one monol can be employed in synthesizing the pre-polymer as a further active hydrogen reactant b). For example, a mono-functional hydrophilic polyoxy(C₂-C₃)alkylene - such as polyoxyethylene or polyoxpropylene - can be incorporated into the polyurethane as a means of modifying the properties of the latex. When present, the monol is present in an amount of from 0.1 to 5 wt.%, based on the weight of reactants a) to c).

As used herein *"polyisocyanate"* means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050. It is also noted that the term *"polyisocyanate"* is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

As regards the aforementioned reaction of polyisocyanates with said polyols, standard catalysts known in the art include: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminium compounds such as aluminium trisacetylacetonate, aluminium trisethylacetoacetate and diisopropoxyaluminium ethylacetoacetate; chelate compounds such as zirconium tetraacetylacetonate and titanium tetraacetylacetonate; organosilicon titanium compounds; bismuth tris-2-ethylhexanoate; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the polyisocyanate, the amount of catalyst employed is typically in the range from 0.005 to 10% by weight of the mixture catalyzed.

As noted, the NCO-functional pre-polymer can optionally be made in the presence of a solvent and the solvent removed at least in part and preferably wholly either before or after the reaction with the hydroxyl functional (meth)acrylates. When a solvent is used, examples of solvents which are not reactive with the isocyanate include: ketones such as acetone and butanone; ethers such as tetrahydrofuran, dioxane and dimethoxyethane; ether esters such as methoxypropyl acetate; (cyclic) amide and ureas such as dimethylformamide and dimethylacetamide; N,N'-dimethyl-2,5-dizapentanone; N-methylpyrrolidone; and, capped glycol ethers. Such solvents may be added at any stage of the pre-polymer preparation.

To form the polyurethane (meth)acrylate, the isocyanate (NCO) groups of the pre-polymer are capped with an isocyanate-reactive capping compound having a hydroxyl group and (meth)acrylate functional group. Suitable end-capping compounds include C₁-C₁₈ hydroxyalkyl esters of (meth)acrylic acid and, in particular, C₁-C₁₂ or C₁-C₈ hydroxyalkyl esters of (meth)acrylic acid. Without intention to limit the present invention, said (meth)acrylates bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

The end-capping reaction may optionally be performed under heating and / or catalysis. That aside, the progress of the reaction should be monitored by Fourier Transform Infrared (FTIR) spectroscopy and deemed complete upon disappearance of the band attributable to the -NCO stretch at circa 2250 cm⁻¹.

### b) (Meth)acrylamide Monomers

The present composition comprises from 5 to 45 wt.%, based on the weight of the composition, of at least one secondary or tertiary (meth)acrylamide monomer represented by the following formula (MA):

CH₂=C(R^{a})-C(O)-N(R^{b})(R^{c}) (MA)

wherein:
R^{a} is hydrogen or a methyl group;
R^{b} is C₁-C₁₂ alkyl, C₁-C₁₂ hydroxyalkyl, C₃-C₁₈ cycloalkyl or C₆-C₁₈ aryl;
R^{c} is hydrogen; or,
R^{b} and R^{c} together form a 5-10 member carbocylic ring or a 5-10 member heterocyclic ring in which one or more of the ring atoms is replaced with -O-, -S- or -NR^{d}-, where R^{d} is hydrogen or a C₁₋₃ alkyl.

The composition may, for instance, comprise from 10 to 40 wt.%, based on the weight of the composition of said at least one secondary or tertiary (meth)acrylamide monomer.

In an important embodiment, the or each (meth)acrylamide monomer included in the composition should be characterized by: a molar volume of from 105 to 135 cm³ ; and / or, a topological polar surface area of from 30 to 50 square Angstroms.

In an further embodiment, which is not intended to be mutually exclusive of the aforementioned embodiment, the or each (meth)acrylamide monomer present in the composition is characterized by the following conditions: R^{a} is hydrogen or a methyl group; R^{b} is C₁-C₆ alkyl, C₁-C₆ hydroxyalkyl, C₃-C₁₂ cycloalkyl or C₆-C₁₈ aryl; R^{c} is hydrogen; or, R^{b} and R^{c} together form a 5-7-member carbocylic ring or a 5-7 member heterocyclic ring in which one or more of the ring atoms is replaced with -O-, - S- or -NR^{d}-, where R^{d} is hydrogen or a C₁₋₃ alkyl.

In particular for Formula (MA): R^{b} is C₁-C₄ alkyl or C₁-C₄ hydroxyalkyl; R^{c} is hydrogen; or, R^{b} and R^{c} together form a 5-7-member carbocylic ring or a 5-7 member heterocyclic ring in which one or more of the ring atoms is replaced with -O- or-S-.

Exemplary monomers according to Formula (MA), which may be used alone or in combination, include: hydroxyethyl acryamide; hydroxyethyl methacrylamide; hydroxypropyl acrylamide; hydroxypropyl methacrylamide; 4-hydroxybutyl acrylamide; 4-hydroxybutyl methacryamide; and, acryloyl morpholine.

### c) (Meth)acrylate Functional Silane Compound

The present composition comprises from 0.1 to 5 wt.%, based on the weight of the composition, of at least one (meth)acrylate functional silane compound, said meth)acrylate functional silane being characterized by the following formula (MS):

Aₘ-B-Si(R^{x})ₙ(OR^{y})3-n (MS)

Wherein:
A comprises a (meth)acryl moiety,
B comprises an aliphatic or aromatic spacer group;
R^{x} is a C₁-C₈ alkyl group or a C₆-C₁₈ aryl group;
R^{y} is a C₁-C₈ alkyl group, preferably a C₁-C₆;
m=1, 2, 3 or 4, preferably 1 or 2 and more preferably 1; and,
n=0, 1 or 2.

The composition may desirably comprise from 0.1 to 2.5 wt.%, for example from 0.5 to 2.5 wt.% of said at least one (meth)acrylate functional silane compound, based on the weight of the composition. It is preferred that the (meth) acrylate functional silane compound has a molecular weight (Mw) of from 200 to 400 g/mol.

Examples of (meth)acrylate functional silane compounds suitable for use herein, either alone or in combination, include but are not limited to: 3-(meth)acryloxypropyl trimethoxysilane; 3-(meth)acryloxypropyl triethoxysilane; 3-(meth)acryloxypropyl tris(methoxyethoxy)silane; 3-(meth)acryloxy-propenyl trimethoxysilane; (meth)acryloxyethyldimethyl(3-trimethoxysilylpropyl)-ammonium chloride; N-(3-(meth)acryloxy-2-hydroxypropyl)-3-aminopropyltriethoxy-silane; O-((meth)acryloxyethyl)-N-(triethoxysilylpropyl)urethane; (meth)acryloxymethyl trimethoxysilane; (meth)acryloxymethyl triethoxysilane; (meth)acryloxymethyl methyldimethoxysilane; (meth)acryloxymethyl methyl diethoxysilane; (meth)acryloxyoctyl trimethoxysilane; [(meth)acryloxymethyl]phenethyl trimethoxysilane; O-[(meth)acryloxyethyl]-N-(triethoxysilylpropyl)carbamate; (meth)acryloxypropyl triisopropoxysilane; (meth)acryloxypropyl methyldimethoxysilane; (meth)acryloxypropyl methyldiethoxysilane; 3-(meth)acryloxypropyl dimethylmethoxysilane; 3-(meth)acryloxypropyl dimethylethoxysilane; (meth)acryloxymethyl dimethylmethoxysilane; (meth)acryloxymethyl dimethylethoxysilane; oligomeric hydrolysate of 3-(meth)acryloxypropyl trimethoxysilane; and; oligomeric hydrolysate of 3-(meth)acryloxypropyl triethoxysilane. A preference may be noted for the use of at least one of 3-(meth)acryloxypropyl trimethoxysilane, 3-(meth)acryloxypropyl triethoxysilane and 3-(meth)acryloxypropyl tris(methoxyethoxy)silane.

### d) Further Ethylenically Unsaturated Non-Ionic Monomers

The composition of the present invention comprises at least one ethylenically unsaturated non-ionic monomer as defined in part d) herein above, the (co-)polymerization of which monomer(s) contributes to the matrix of the adhesive.

### d1) Aliphatic and Cycloaliphatic (Meth)acrylate Monomers

Part d) of the composition may comprise or consist of d1) at least one (meth)acrylate monomer represented by Formula I:

H₂C=CGCO₂R¹ (I)

wherein:
G is hydrogen, halogen or a C₁ alkyl group; and,
R¹ is selected from: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; and, C₂-C₁₂ alkynyl.

For example, R¹ may be selected from: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl, and, C₂-C₈ alkynyl.

Desirably, said monomer(s) d1) are characterized in that R¹ is selected from C₁-C₁₈ alkyl, C₁-C₆ hydroxyalkyl and C₃-C₁₈ cycloalkyl.

Examples of (meth)acrylate monomers d1) in accordance with Formula (I) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

In an embodiment of the invention, (meth)acrylic monomers represented by Formula I constitute at least 60 mole %, preferably at least 75 mole % and more preferably at least 90 mole % of the total molar amount of d) said ethylenically unsaturated non-ionic monomers present.

### d2) Aromatic (Meth)acrylate Monomers

Part d) of the composition may comprise d2) at least one (meth)acrylate monomer represented by Formula II:

H₂C=CQCO₂R² (II)

wherein:
Q may be hydrogen, halogen or a C₁ alkyl group; and,
R² may be selected from C₆-C₁₈ aryl, C₁-C₉ heteroaryl, C₇-C₁₈ alkaryl and C₇-C₁₈ aralkyl.

Exemplary (meth)acrylate monomers d2) in accordance with Formula (II) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

In an embodiment of the invention, (meth)acrylic monomers represented by Formula II constitute at least most 40 mole %, preferably at most 25 mole % and more preferably at most 10 mole % of the total molar amount of b) said ethylenically unsaturated non-ionic monomers present.

### d3) (Meth)acrylate-functionalized Oligomer

Part d) of the composition may comprise d3) at least one (meth)acrylate functionalized oligomer selected from the group consisting of (meth)acrylate-functionalized polyepoxide resins, (meth)acrylate-functionalized polybutadienes, (meth)acrylic polyol (meth)acrylates, polyester (meth)acrylate oligomers, polyamide (meth)acrylate oligomers and polyether (meth)acrylate oligomers. For surety, said oligomers d3) are distinct from the polyurethane (meth)acrylates included as part a) of the composition.

Said oligomers d3) may have one or more acrylate and/or methacrylate groups attached to the oligomeric backbone, which (meth)acrylate functional groups may be in a terminal position on the oligomer and / or may be distributed along the oligomeric backbone. It is preferred that the or each (meth)acrylate functionalized oligomer d3) included in the composition: i) has two or more (meth)acrylate functional groups per molecule; and / or, ii) has a weight average molecular weight (Mw) of from 300 to 1000 daltons.

In an embodiment of the invention, (meth)acrylic-functionalized monomers d3) constitute at least most 40 mole %, preferably at most 25 mole % and more preferably at most 10 mole % of the total molar amount of d) said ethylenically unsaturated non-ionic monomers present.

### d4) Further ethylenically unsaturated non-ionic monomers

The present invention does not preclude the presence of additional ethylenically unsaturated non-ionic monomers not conforming to the definitions of a), b), c) and d1)-d3) given herein. However, the addition of such further monomers should be constrained by the condition that said further monomers d4) do not exceed 30 mole % of the total amount of monomers d).

Without intention to limit the present invention, such further ethylenically unsaturated non-ionic monomers may include: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; C₁-C₆ alkyl esters of α,β-monoethylenically unsaturated tricarboxylic acids bearing at least one free carboxylic acid group; ethylenically unsaturated sulfonic acids, such as vinylsulfonic acid, styrenesulfonic acid and acrylamidomethylpropanesulfonic acid; vinyl esters, such as vinyl acetate, vinyl propionate and monomers of the VEOVA^{™} series available from Shell Chemical Company; vinyl and vinylidene halides; vinyl ethers such as vinyl ethyl ether; vinyl ketones including alkyl vinyl ketones, cycloalkyl vinyl ketones, aryl vinyl ketones, arylalkyl vinyl ketones, and arylcycloalkyl vinyl ketones; aromatic or heterocyclic aliphatic vinyl compounds; poly(meth)acrylates of alkane polyols, such as ethylene glycol di(meth)acrylate, propylene glycol di(meth)acrylate, butylene glycol di(meth)acrylate, neopentyl glycol di(meth)acrylate, hexylene glycol di(meth)acrylate, trimethylolpropane tri(meth)acrylate, glycerin tri(meth)acrylate, and pentaerythritol tetra(meth)acrylate; poly(meth)acrylates of oxyalkane polyols such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; polyethylene glycol di(meth)acrylates; and, bisphenol-A di(meth)acrylates, such as ethoxylated bisphenol-A (meth)acrylate ("EBIPMA").

Representative examples of other ethylenically unsaturated polymerizable non-ionic monomers d4) include, without limitation: ethylene glycol dimethacrylate (EGDMA); fumaric, maleic, and itaconic anhydrides, monoesters and diesters with C₁-C₄ alcohols such as methanol, ethanol, propanol, isopropanol, butanol, isobutanol, and tert-butanol. Representative examples of vinyl monomers include, without limitation, such compounds as: vinyl acetate; vinyl propionate; vinyl ethers, such as vinyl ethyl ether; and, vinyl ethyl ketone. Representative examples of aromatic or heterocyclic aliphatic vinyl compounds include, without limitation, such compounds as styrene, α-methyl styrene, vinyl toluene, tert-butyl styrene, 2-vinyl pyrrolidone, 5-ethylidene-2-norbornene and 1-, 3-, and 4-vinylcyclohexene.

For completeness, whilst the above described co-polymerizable acid monomers should typically be used in the form of free acid, it is not precluded that the constituent acid groups of the monomers be partially or completely neutralized with suitable bases, provided this does not compromise their participation in co-polymerization.

### e) Photoinitiator

The compositions of the present invention include from 0.1 to 5 wt.%, based on the weight of the composition, of e) at least one free radical photoinitiator, which compound initiates the polymerization or hardening of the compositions upon irradiation with actinic radiation.

Typically, free radical photoinitiators are divided into those that form radicals by cleavage, known as "Norrish Type I", and those that form radicals by hydrogen abstraction, known as "Norrish Type II". The Norrish Type II photoinitiators require a hydrogen donor, which serves as the free radical source: as the initiation is based on a bimolecular reaction, the Norrrish Type II photoinitiators are generally slower than Norrish Type I photoinitiators which are based on the unimolecular formation of radicals. On the other hand, Norrish Type II photoinitiators possess better optical absorption properties in the near-UV spectroscopic region. The skilled artisan should be able to select an appropriate free radical photoinitiator based on the actinic radiation being employed in curing and the sensitivity of the photoinitiator(s) at that wavelength.

Preferred free radical photoinitiators are those selected from the group consisting of: benzoylphosphine oxides; aryl ketones; benzophenones; hydroxylated ketones; 1-hydroxyphenyl ketones; ketals; and, metallocenes. For completeness, the combination of two or more of these photoinitiators is not precluded in the present invention.

Particularly preferred free radical photoinitiators are those selected from the group consisting of: benzoin dimethyl ether; 1-hydroxycyclohexyl phenyl ketone; benzophenone; 4-chlorobenzophenone; 4-methylbenzophenone; 4-phenylbenzophenone; 4,4'-bis(diethylamino) benzophenone; 4,4'-bis(N,N'-dimethylamino) benzophenone (Michler's ketone); isopropylthioxanthone; 2-hydroxy-2-methylpropiophenone (Daracur 1173); 2-methyl-4-(methylthio)-2-morpholinopropiophenone; methyl phenylglyoxylate; methyl 2-benzoylbenzoate; 2-ethylhexyl 4-(dimethylamino)benzoate; ethyl 4-(N,N-dimethylamino)benzoate; phenylbis(2,4,6-trimethylbenzoyl)phosphine oxide; diphenyl(2,4,6-trimethylbenzoyl)phosphine oxide; and, ethyl phenyl(2,4,6-trimethylbenzoyl)phosphinate. Again, for surety, the combination of two or more of these photoinitiators is not precluded in the present invention.

Where the composition of the present invention comprises a free radical photoinitiator, irradiation of said curable compositions generates the active species from the photoinitiator(s) which initiates the cure reactions. Once that species is generated, the cure chemistry is subject to the same rules of thermodynamics as any chemical reaction: the reaction rate may be accelerated by heat. The practice of using thermal treatments to enhance the actinic-radiation cure of monomers is generally known in the art.

As would be recognized by the skilled artisan, photosensitizers can be incorporated into the compositions to improve the efficiency with which a photoinitiator e) uses the energy delivered. The term *"photosensitizer"* is used in accordance with its standard meaning to represent any substance that either increases the rate of photoinitiated polymerization or shifts the wavelength at which polymerization occurs. Photosensitizers should be used in an amount of from 0 to 25 wt.%, based on the weight of said free radical photoinitiator.

The use of the free radical (photo)initiator may produce residue compounds from the (photo)chemical reaction in the final cured product. The residues may be detected by conventional analytical techniques such as: infrared, ultraviolet and NMR spectroscopy; gas or liquid chromatography; and, mass spectroscopy. Thus, the present invention may comprise cured matrix (co-)polymers and detectable amounts of residues from a free radical (photo-)initiator. The residues are present in small amounts and do not normally interfere with the desired physiochemical properties of the final cured product.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: tougheners; electrically conductive particles; electrically non-conductive fillers; catalysts; plasticizers; stabilizers including UV stabilizers; antioxidants; reactive diluents; drying agents or moisture scavengers; adhesion promoters; fungicides; flame retardants; rheological adjuvants; colour pigments or colour pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 30 wt.% of the total composition and preferably should not comprise more than 15 wt.% of the composition.

The composition of the present invention may optionally comprise electrically non-conductive particulate filler. The composition may, for instance, contain from 0 to 10 wt.% or from 2 to 8 wt.% of electrically non-conductive particles, based on the weight of the composition.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silicic acid, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibres, wood flour, sawdust, cellulose, cotton, pulp, cotton, wood chips, chopped straw, chaff, ground walnut shells, and other chopped fibres. Short fibres such as glass fibres, glass filament, polyacrylonitrile, carbon fibres, Kevlar fibres, or polyethylene fibres can also be added.

The pyrogenic and/or precipitated silicic acids advantageously have a BET surface area from 10 to 90 m²/g. When they are used, they do not cause any additional increase in the viscosity of the composition according to the present invention but do contribute to strengthening the cured composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition may be preferred for many applications: such fillers are also described as rheological adjuvants, e.g. hydrogenated castor oil, fatty acid amides, or swellable plastics such as PVC.

The desired viscosity of the curable composition formed may be determinative of the amount of filler used. Having regard to that latter consideration, the total amount of fillers - both electrically conductive and non-conductive - present in the compositions should not prevent the composition from being readily applicable by the elected method of application to the composition to a substrate. For example, photocurable compositions of the present invention which are intended to be applicable to a specific locus within an electronic device - to bond anisotropic conductive films (ACF) therein for instance - should possess a viscosity of from 1000 to 50,000, preferably from 10,000 to 20,000 mPas. A *"plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, adipic acid, sebacic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this invention are to be understood as antioxidants, UV stabilizers, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; and, aromatic hydrocarbon resins especially those containing phenol groups, such as ethoxylated or propoxylated phenols.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the defined curable compositions, the parts are brought together and mixed. It is important that the mixing homogenously distributes the ingredients within the adhesive composition: such thorough and effective mixing can be determinative of a homogeneous distribution of any constituent particulate filler or other adjunct material within the polymer matrix obtained following curing.

As is known in the art, to form one component (1K) curable compositions, the elements of the composition are brought together and homogeneously mixed under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in pre-determined amounts without intentional photo-irradiation.

In accordance with the broadest process aspects of the present invention, the above described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride ortrichloroethylene; and, water rinsing, preferably with deionized or demineralized water.

In some embodiments, the adhesion of the coating compositions of the present invention to the preferably pre-treated substrate may be facilitated by the application of a primer thereto. Indeed primer compositions may be necessary to ensure efficacious fixture and / or cure times of the adhesive compositions on inactive substrates. The skilled artisan will be able to select an appropriate primer.

The compositions are then applied to the optionally pre-treated, optionally primed surfaces of the substrate by conventional application methods such as: printing methods, including screen printing; pin transfer; and, syringe application, including by electro-pneumatically controlled syringes. It is recommended that the compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

Given that the composition comprises a free radical photo-initiator, the energy source used to initiate the curing of the applied compositions will emit at least one of ultraviolet (UV) radiation, infrared (IR) radiation, visible light, X-rays, gamma rays, or electron beams (e-beam). Subsequent to their application, the photocurable adhesive compositions may typically be activated in less than 5 minutes, and commonly between 1 and 60 seconds - for instance between 3 and 12 seconds - when irradiated using commercial curing equipment.

Irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps, UV-LED lamps and laser beam sources such as excimer lasers and argon-ion lasers.

Where an e-beam is utilized to cure the applied coating(s), standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to satisfactorily cure an individual coating composition - such that said coating becomes fixed, for example - will depend on a variety of factors including the angle of exposure to the radiation and the thickness of a coating layer. Broadly, however, a curing dosage of from 5 to 5000 mJ/cm² may be cited as being typical: curing dosages of from 50 to 500 mJ/cm², such as from 50 to 400 mJ/cm² may be considered highly effective.

The purpose of irradiation is to generate the active species from the photoinitiator which initiates the cure reactions. Once that species is generated, the cure chemistry is subject to the same rules of thermodynamics as any chemical reaction: the reaction rate may be accelerated by heat or retarded by lower temperatures. Without intention to limit the present invention, the complete curing of the applied curable compositions should typically occur at temperatures in the range of from 20°C to 200°C, preferably from 20°C to 170°C. Where applicable, the temperature of the curable compositions may be raised above the mixing temperature and / or the application temperature using conventional means, including microwave induction.

For completeness, exemplary substrates to which the compositions of the present invention may be applied include: engineered plastics; glass; polybutylene terephthalate (PBT); hard stainless steel (SUS); polycarbonate (PC); polyethylene (PE); polypropylene (PP); liquid crystal polymer (LCP); and, phenylpropanolamine (PPA). It is considered that the compositions may have particular utility for bonding engineering plastics as found in the displays of electronic devices.

The following examples are illustrative of the present invention and are not intended to limit the scope of the invention in any way.

### EXAMPLE

The data presented in the Examples is obtained in the following manner:
Molar Volume: This is the volume occupied by one mole of the given monomer and is obtained from published data.

Topological Polarity Surface Area: For the monomer stated in the Table 2 below, this parameter is the sum of the solvent-accessible surface areas of atoms with absolute value of partial charges greater than or equal to 0.2. This is obtained from published data.

Electro-conductive Disconnection: Reference is made to the appended drawings in which:

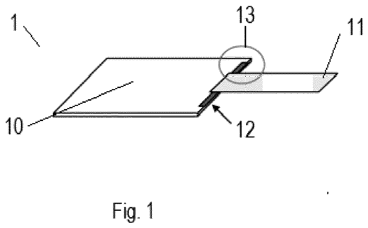

Fig. 1 provides a laminar structure for the testing of electro-conductive disconnection.

The depicted laminar structure (1) consists of the following layers, disposed from bottom to top: indium tin oxide (ITO, 10) glass substrate; anisotropic conductive film (ACF, 12); and, Chip-on-Flex (COF, 11) film. Portions of both the ITO glass (10) and COF (11) film substrates extended in opposite directions along a longitudinal axis, beyond the laminar regions of the structure (1). The exemplified adhesive compositions were applied at exact, pre-determined quantities between the substrates and at the boundaries (13) of the ACF films (12). The electrical resistance provided by this laminar structure (1) was measured initially and then monitored over time. Where "NG" is provided in the results below, this means that electro-resistance was not measureable after disposing of the adhesive. The designation "OK" means the electro-resistance was measureable after disposing of the adhesive.

Lap Shear Tests: The test substrate was stainless steel (1.4301), the surface of which had been cleaned with an acetone wipe. The substrate was provided at a thickness of 0.1 inch and cut into six 2.5 cm x 10 cm (1" x 4") samples for tensile testing of each formulation. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.5 cm x 2.5 cm (1" x 1") with a bond thickness of 0.1 cm (40 mil). The applied adhesive compositions were cured by exposing the adhesive to ultraviolet light at a curing dosage of 250 mJ/cm² for 1 minute. The bonded structures were then stored at 30°C, 55% relative humidity for 24 hours prior to tensile lap shear strength testing. The listed result (MPa) for each formulation is the mean of the obtained test results.

### Example 1

The ingredients provided in Table 1 below were homogeneously mixed to form Comparative Formulations A, B and Formulations K-N in accordance with the invention.

**Table 1**

| **Ingredient** | **Comparati ve A (wt.%)** | **Comparati ve B (wt.%)** | **Inventio n K (wt.%)** | **Inventio n L (wt.%)** | **Inventio n M (wt.%)** | **Inventio n N (wt.%)** |
|---|---|---|---|---|---|---|
| Polyurethane Acrylate | 39.0 | 39.0 | 49.0 | 49.0 | 45.0 | 45.0 |
| Isobornyl acrylate | 32.0 | 32.0 | 22.0 | 22.0 | 19.0 | 9.6 |
| Dimethylacrylamide (DMAA) | 17.6 | | | | | |
| Diethylacrylamide (DEAA) | | 17.6 | | | | |
| Hydroxyethyl acrylamide (HEAA) | | | 17.6 | | | 14.0 |
| Acryloyl morpholine (ACMO) | | | | 17.6 | 10.0 | 20.0 |
| Cyclic trimethylolpropane formal acrylate | | | | | 14.6 | |
| Methacryloxypropyl Trimethoxysilane | 1.9 | 1.9 | 1.9 | 1.9 | 1.9 | 1.9 |
| 2,2-dimethoxy-2-phenylacetophenone | 2.3 | 2.3 | 2.3 | 2.3 | 2.3 | 2.3 |
| Diphenyl(2,4,6-trimethylbenzoyl) phosp hine oxide | 0.9 | 0.9 | 0.9 | 0.9 | 0.9 | 0.9 |
| Fumed Silica | 6.3 | 6.3 | 6.3 | 6.3 | 6.3 | 6.3 |

The data obtained from the Formulations A-B and K-L are given in Table 2 herein below.

**Table 2**

| **Formulation** | **Monomer** | **Molar Volume** | **Polarity Surface Area (square Angstrom)** | **Electro-conductive Adhesive Disconnection** | **Adhesion Shear Strength (MPa)** |
|---|---|---|---|---|---|
| A (Comparative) | DMAA | 110.5 ± 3.0 | 20 | NG | 12.4 |
| B (Comparative) | DEAA | 143.5 ± 3.0 | 20 | NG | 12.7 |
| K | HEAA | 131.4 ± 3.0 | 30 | OK | 14.0 |
| L | ACMO | 109.6 ± 3.0 | 49 | OK | 13.5 |

Formulations K and L provide acceptable adhesive connection for use with electro-conductive substrates. The increased lap shear strength obtained in using formulations K and L is noteworthy.

In view of the foregoing description and examples, it will be apparent to those skilled in the art that equivalent modifications thereof can be made without departing from the scope of the claims.

## Claims

1. A photocurable one-component (1K) adhesive composition comprising, based on the weight of the composition:
from 30 to 70 wt.% of a) at least one polyurethane (meth)acrylate;
from 5 to 45 wt.% of b) at least one secondary or tertiary (meth)acrylamide monomer represented by the formula (MA):
CH₂=C(R^{a})-C(O)-N(R^{b})(R^{c}) (MA)
wherein:
R^{a} is hydrogen or a methyl group;
R^{b} is C₁-C₁₂ alkyl, C₁-C₁₂ hydroxyalkyl, C₃-C₁₈ cycloalkyl or C₆-C₁₈ aryl;
R^{c} is hydrogen; or,
R^{b} and R^{c} together form a 5-10 member carbocylic ring or a 5-10 member heterocyclic ring in which one or more of the ring atoms is replaced with -O-, -S- or -NR^{d}-, where R^{d} is hydrogen or a C₁₋₃ alkyl.
from 0.1 to 5 wt.% of c) at least one (meth)acrylate functional silane compound, said meth)acrylate functional silane being **characterized by** the formula (MS):
Aₘ-B-Si(R^{x})ₙ(OR^{y})₃₋ₙ (MS)
wherein:
A comprises a (meth)acryl moiety,
B comprises an aliphatic or aromatic spacer group;
R^{x} is a C₁-C₈ alkyl group or a C₆-C₁₈ aryl group;
R^{y} is a C₁-C₈ alkyl group;
m=1, 2, 3 or 4; and,
n=0, 1 or 2.
from 5 to 40 wt.% of d) at least one further ethylenically unsaturated non-ionic monomer; and,
from 0.1 to 5 wt.% of e) at least one free radical photoinitiator.

2. The adhesive composition according to claim 1 comprising, based on the weight of the composition:
from 40 to 70 wt.%, preferably from 40 to 60 wt.% of a) said at least one polyurethane (meth)acrylate.
from 10 to 40 wt.% of b) said at least one secondary or tertiary (meth)acrylamide monomer.
from 0.1 to 2.5 wt.%, preferably from 0.5 to 2.5 wt.% of c) said at least one (meth)acrylate functional silane compound;
from 5 to 40 wt.% of d) at least one further ethylenically unsaturated non-ionic monomer; and,
from 0.1 to 5 wt.% of e) at least one free radical photoinitiator.

3. The adhesive composition according to claim 1 or claim 2, wherein the or each polyurethane (meth)acrylate a) present in the composition is **characterized by** having from 2 to 3, preferably from 2.2 to 2.9 (meth)acrylate groups.

4. The adhesive composition according to any one of claims 1 to 3, wherein the or each secondary or tertiary (meth)acrylamide monomer b) included in the composition is **characterized by**: a molar volume of from 105 to 135 cm³; and / or, a topological polar surface area of from 30 to 50 square Angstroms.

5. The adhesive composition according to any one of claims 1 to 4, wherein in Formula (MA):
R^{b} is C₁-C₄ alkyl or C₁-C₄ hydroxyalkyl;
R^{c} is hydrogen; or,
R^{b} and R^{c} together form a 5-7-member carbocylic ring or a 5-7 member heterocyclic ring in which one or more of the ring atoms is replaced with -O- or -S-.

6. The adhesive composition according to any one of claims 1 to 5, wherein the or each (meth) acrylate functional silane compound present in the composition has a molecular weight (Mw) of from 200 to 400 g/mol.

7. The adhesive composition according to any one of claims 1 to 6, wherein d) said at least one further ethylenically unsaturated non-ionic monomer comprises or consists of:
d1) at least one (meth)acrylate monomer represented by Formula I:
H₂C=CGCO₂R¹ (I)
wherein:
G is hydrogen, halogen or a C₁ alkyl group; and,
R¹ is selected from: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; and, C₂-C₁₂ alkynyl.

8. The adhesive composition according to claim 7, wherein R¹ is selected from: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl, and, C₂-C₈ alkynyl.

9. The adhesive composition according to any one of claims 1 to 8, wherein d) said at least one further ethylenically unsaturated non-ionic monomer comprises:
d2) at least one (meth)acrylate monomer represented by Formula II:
H₂C=CQCO₂R² (II)
wherein:
Q may be hydrogen, halogen or a C₁ alkyl group; and,
R² may be selected from C₆-C₁₈ aryl, C₁-C₉ heteroaryl, C₇-C₁₈ alkaryl and C₇-C₁₈ aralkyl.

10. The adhesive composition according to any one of claims 1 to 9, wherein d) said at least one further ethylenically unsaturated non-ionic monomer comprises d3) at least one (meth)acrylate functionalized oligomer selected from the group consisting of (meth)acrylate-functionalized polyepoxide resins, (meth)acrylate-functionalized polybutadienes, (meth)acrylic polyol (meth)acrylates, polyester (meth)acrylate oligomers, polyamide (meth)acrylate oligomers and polyether (meth)acrylate oligomers.

11. The adhesive composition according to any one of claims 1 to 10 further comprising from 1 to 10 wt.%, preferably from 2 to 8 wt.%, based on the weight of the composition, of electrically non-conductive particles.

12. The adhesive composition according to claim 11, wherein said electrically non-conductive particles comprise or consist of pyrogenic silicic acids.

13. A bonded structure comprising
a first material layer; and,
a second material layer;
wherein the cured one component (1 K) adhesive composition as defined in any one of claims 1 to 12 is disposed in contact with both first and second material layers.

14. The bonded structure according to claim 13, wherein said first material layer consists of an anisotropic conductive film and said second layer consists of non-conductive film.

15. Use of the adhesive composition as defined in any one of claims 1 to 12 or the bonded structure as defined in claim 13 or claim 14 in an electronic device.
